# EUROPEAN PATENT SPECIFICATION

(11) **EP 0 796 876 B1**
(45) Date of publication and mention of the grant of the patent: **11.07.2001**
(21) Application number: 97103381.6
(22) Date of filing: 28.02.1997
(51) Int. Cl.: C08F 212/08, C08F 220/06, C08F 228/02, C09B 67/38

(54) **Dye compositions and methods for the manufacture thereof**
Farbstoffzusammensetzungen und Verfahren zu ihrer Herstellung
Compositions de colorants et méthodes pour leur préparation

(30) Priority: 22.03.1996 US 620651
(43) Date of publication of application: 24.09.1997
(73) Proprietor: National Starch and Chemical Investment Holding Corporation, Wilmington, Delaware 19809 (US)
(72) Inventor: Hodgetts, Robert W., Bletchley, Milton Keynes MK3 7QN (GB); Kimpton, Paul T., Daventry, Northants NN11 4JB (GB); Verlinden, Jean, 3300 Tienen (BE)
(74) Representative: Hagemann, Heinrich, Dr.rer.nat., Dipl.-Chem.

(56) References cited:
- WO-A-96/20962
- DE-A- 1 696 163
- DE-A- 1 963 398

## Description

This invention relates to water-dispersible dye compositions, to novel dispersants used therein, to novel polymers used in such dispersants and to methods for making such polymers.

It is known that dispersions of particles of an inorganic solid in an aqueous medium, e.g., inorganic pigments in the preparation of emulsion paints, are often stabilized by the presence in the aqueous medium of a polyelectrolyte, e.g., a partially neutralized polymeric carboxylic acid. It has been disclosed that by employing as dispersants a certain class of amphipathic copolymer it is possible to produce dispersions in aqueous media or organic solid particles which have higher disperse phase volume concentrations than attainable with conventional dispersants and which yet possess a high degree of fluidity.

In U.S.-A-2,930,775, it has been proposed to use alternating copolymers of maleic anhydride and diisobutylene as dispersants for the preparation of pigments, including organic pigment, pastes.

In U.S.-A- 3,840,487 it has been proposed to use in the preparation of pigment pastes, preferably inorganic pigment pastes, a dispersant which is an alkali metal or ammonium salt of a copolymer containing moieties of an unsaturated monocarboxylic acid and moieties of an unsaturated carboxylic acid ester.

DE-A-1696163 describes synthetic binders for use in paper production which comprise a copolymer A from styrene and/or acrylnitrile, (meth)acrylic ester, and optionally ethylenically unsaturated compounds, and copolymer B from (meth)acrylic esters, ethylenically unsaturated carboxylic acids and optionally (meth)acrylamide and/or further ethylenically unsaturated compounds.

DE-A-1963398 discloses binder comprising copolymers of (meth)acrylic esters, unsaturated carboxylic acids as well as optionally further vinyl monomers.

U.S.-A-4,373,054 discloses copolymers which may be used to prepare dispersions of particles of organic solids in aqueous media. The patent provides a dispersion in an aqueous medium of an organic particulate solid, including pigments and dyes, substantially all the particles of which have a size less than 100 microns. The dispersion contains a polymer composition which is soluble in the aqueous medium, characterized in that the polymeric composition comprises a copolymer of at least one hydrophobic monomer and at least one hydrophilic monomer. The hydrophobic monomer provides less than 30 percent by weight of the monomers, while the hydrophilic monomer provides greater than 70 weight percent of the monomers.

It is known to produce dispersions of solid organic particles in aqueous or nonaqueous media with the aid of conventional dispersants such as sulphonated naphthalene-formaldehyde condensates, lignosulfonates, partially hydrolyzed poly(vinyl acetate) or poly(ethylene oxide)-poly(propylene oxide) block copolymers. Kraft and bisulfite lignosulfonates in particular are known to be used as dispersants in preparing dye compositions known heretofore, particularly in textile dye compositions. A Kraft lignosulfonate is produced as a result of the Kraft pulping process utilized in the manufacture of wood pulp. The Kraft process itself is well known and documented in the literature. Bisulfite lignosulfonates are prepared by boiling wood pulp with calcium bisulfite. Methods for making bisulfite lignosulfonates also are well known and documented in the literature.

While lignosulfonates commonly are used as dispersants, it is well described in the literature that they may have an adverse effect on materials which are treated with dye compositions. For example, Kraft lignosulfonates typically are dark in color and may stain or discolor the substrate to which it is applied. This is particularly true where a lighter shades of dyes are used to treat fabric. In addition, they can also chemically reduce susceptible functional groups on the dye molecule such as diazo groups.

The present invention is directed to water-dispersible dye compositions, to dispersants utilized in the manufacture of such dye compositions, to polymers which are used in such dispersants and to methods of making such polymers. The polymers used as dispersants are prepared from a hydrophilic monomer, a hydrophobic monomer and from 0.5 to 10 mole percent of an alpha-olefin sulfonate, wherein the α-olefin sulfonate is refluxed with a water-soluble persulfate, such as sodium, potassium or ammonium persulfate prior to combining the hydrophilic monomer, the hydrophobic monomer and the α-olefin sulfonate and wherein the molar ratio of the hydrophilic monomer to the hydrophobic monomer ranges from 5:1 to 0.2:1, more preferably from 2:1 to 0.4:1. When sodium persulfate is used, the period of time is approximately one hour. The dispersants also comprise lignosulfonates blended with the polymers according to the present invention.

Dispersants are used in the manufacture of dyes in order to prepare stable aqueous dispersions of the dyes. Suitable dispersants should remain adsorbed onto dye particles at temperatures and shear rates typically achieved during the manufacture and use of the dye, for instance from between 70°C to 150°C and at shear rates ranging from 1x10⁴ 1/sec to 2x10⁴ 1/sec. The present invention is directed to polymers which are used as dispersants in the preparation of water-dispersible dye compositions, the water-dispersible dye compositions themselves, the dispersants and methods of making the dye compositions. Dispersants are used in the manufacture of dyes in order to prepare stable aqueous dispersions of the dyes. Suitable dispersants must stay adsorbed at temperatures between 90-135°C and at shear rates of 1-2 x10⁴ 1/sec. Kraft and bisulfite lignosulfonates are known to be used as dispersants in preparing dye compositions known heretofore, particularly in textile dye compositions. As used herein, "lignosulfonate" is intended to include both Kraft and bisulfite lignosulfonates, unless the lignosulfonate is specifically described as either the Kraft lignosulfonate or the bisulfite lignosulfonate. A Kraft lignosulfonate is produced as a result of the Kraft pulping process utilized in the manufacture of wood pulp.. The Kraft process. itself is well known and documented in the literature. Bisulfite lignosulfonates are prepared by boiling wood pulp with calcium bisulfite. Methods for making bisulfite lignosulfonates also are well known and documented in the literature.

Lignosulphonates are used widely as they anchor strongly to the dye particle and are best described as partially-sulphonated, substituted, phenyl propane units containing hydroxyl and methoxy groups. The molecules are typically only 20 to 30 percent ionized and exist as huge spheroids with the internal ionizable groups remaining undissociated. This affects their solubility at different pH and hence their dispersing ability.

Typically, water-dispersible dye compositions are manufactured from a dye press-cake having a predetermined dye strength and which contains dye particles mixed with water and other impurities. The dyes produced therefrom are characterized as having a particular dye strength. Dye strength is expressed as the percent strength of a dye formulation as compared to an industry standard. Each particular dye will have its particular standard associated therewith. A pure dye will have a high dye strength expressed as a percentage of the standard.

The dye press-cake is produced as a precipitate from water or solvent according to methods known to those skilled in the art and is sometimes washed to remove excess electrolyte. The press-cake typically is a very coarse, lumpy, crystalline solid and typically contains from 40-60 weight percent water and 60-40 weight percent dye particles and has a particular dye strength. The dye press-cake then is converted into a working dye composition having a predetermined dye strength by the addition of dispersants and other conventional additives, such as surfactants and fillers. Water is added to adjust total solids to a desired level.

The degree to which the dye press-cake is diluted will depend on the dye strength desired for the resultant dye composition. For instance, if a dye press-cake has a dye strength of 400 percent, and it is desired to produce a dye composition having a dye strength of 200 percent, the dye press-cake would be diluted by half with dispersant and other conventional additives. The total solids content of the dye slurry then may be adjusted as desired by adding water.

The present invention is applicable to various classes of dyes. Such classes include dispersed dyes, VAT dyes and reactive dyes. Dispersed dyes are prepared from a water-dispersible dye powder which has been prepared by removing the water from an aqueous dye dispersion, which in turn has been prepared from a dye press-cake. After the powder is formed, it is redispersed in water with conventional additives such as surfactants and the like. VAT dyes are dye dispersions which are prepared from dye press-cake and which do not have the water removed therefrom in order to form a powder of the dye. Reactive dyes typically are applied in the form of solutions and the dyes react with cellulosic fibers as opposed to physically adhering or anchoring onto the fiber surface.

Physical properties of the dyes can vary tremendously and are dependent on the chemistry and crystalline form: Some are sparingly soluble while others dissolve quickly, especially at different temperatures. Often melting points are around the temperatures used to dry the dispersions.

The dye industry utilizes standard nomenclature to describe different dyes. For instance, Disperse Blue 79 is the generic description for a blue, dispersed dye having a particular chemical composition and a particular dye strength. The nomenclature is sufficiently well known in the dye industry that if one skilled in the art were to request a specific dye by the generic name, one could be assured that the dye would have the same chemical structure and properties, regardless of the source of the dye. A commercial example of Disperse Blue 79 is available from Yorkshire Chemicals Ltd. under the trade name Serilene GR-LS. Other exemplary dispersed dyes include Disperse Brown 1, Disperse Yellow 54, Disperse Yellow 88, Disperse Blue 56, Disperse Blue 122, Disperse Red 1, Disperse Red 60, and Disperse Red 156.

In preparing dye compositions according to the present invention, the dispersant utilized comprises a polymer prepared from a hydrophilic monomer, a hydrophobic monomer and from 0.5 to 10 mole percent of a polymerizable, alpha-olefin sulfonate, wherein the molar ratio of the hydrophilic monomer to the hydrophobic monomer ranges from 5:1 to 0.2:1, preferably from 2:1 to 0.4:1 and more preferably from 1.5:1 to 0.5:1.

"Hydrophobic monomer", as used herein, means a monomer which comprises a polymerizable olefinically unsaturated group, which upon polymerization would be converted into a homopolymer which would be sufficiently hydrophobic to be insoluble in an aqueous medium in which a copolymer derived therefrom would be used in the present invention, and is selected from monomers containing one or more aromatic rings and a polymerizable vinyl group, e.g., styrene, α-methylstyrene, 1-vinyl-naphthalene and 9-vinylanthracene. Particularly preferred hydrophobic monomers include styrene and 1-vinyl-naphthalene.

"Hydrophilic monomer", as used herein, means a monomer which comprises a polymerizable olefinically unsaturated group and which upon polymerization would be converted into a homopolymer which would be sufficiently hydrophilic to be soluble in an aqueous medium in which a copolymer derived therefrom would be used in the present invention.

Preferably, at least one hydrophilic monomer contains an anionic group, i.e. it contains an acidic group and/or a salt thereof. The acidic group is preferably a carboxylic acid group. Where at least one hydrophilic monomer comprises a salt of an acid, while we do not exclude the possibility that the cation associated therewith may be derived from an organic base, the cation is preferably derived from an inorganic base, e.g., ammonia, and more preferably from a metal of Group IA of the Periodic Table of Elements, e.g., sodium

It will be appreciated that where acidic and salt groups are present in the copolymer used in the present invention, the ratio of acidic to salt groups may vary within wide limits such that the composition of the hydrophilic component of the copolymer may be in the range from 0% acidic groups and 100% salt groups to 100% acidic groups and 0% salt groups.

The polymerizable olefinically unsaturated carboxylic acids and salts thereof which may provide at least one hydrophilic monomer of the copolymer used in the present invention contain at least one activated carbon-carbon double bond and at least one carboxyl group; that is, an acid containing an olefinic double bond which polymerizes because of the position of the double bond in the monomer molecule either being in the alpha-beta position with respect to the carboxyl group or as part of a terminal methylene group, i.e., CH₂ = CR, wherein R is the balance of the molecule. As examples of such carboxylic acids and salts may be mentioned acrylic acid, methacrylic acid, ethacrylic acid, alpha-chloroacrylic acid, alpha-cyano-acrylic acid, beta-methylacrylic acid (crotonic acid), alpha-phenyl-acrylic acid, beta-acryloxy-propionic acid, sorbic acid, alpha-chloro-sorbic acid, angelic acid, cinnamic acid, p-chloro-cinnamic acid, beta-styryl-acrylic acid, itaconic acid, maleic acid, fumaric acid and tricarboxy-ethylene.

The preferred polymerizable olefinically unsaturated carboxylic acids are the mono-olefinic carboxylic acids having the general structure 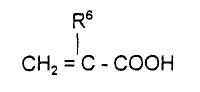 wherein R⁶ is a substituent selected from the group consisting of hydrogen, halogen, cyano, alkyl, aryl, aralkyl, alkaryl, or cycloaliphatic groups. Preferably R⁶ is hydrogen or methyl, and more preferably R⁶is hydrogen.

The alpha-olefin sulfonate (AOS) used in the preparation of the polymer may be described as a surfactant. The reaction between alpha-olefins and SO₃ is not straightforward. Mixtures of alkene sulfonic acids, sultones, alkene disulfonic acids and sultone sulfonic acids may be formed. The sultones must be hydrolyzed to produce hydroxysulfonic acids. All materials identified as and sold under the name AOS therefore are neutralized, usually with soda, and consist of mixtures of R-CH=CHSO₃Na and R-CHOH(CH₂)ₙSO₃Na, where n is an integer from 10 to 30. Preferably, n is an integer from 12 to 20. The AOS typically is supplied as a powder or as a 40% solution in water. Examples of AOS include those obtainable under the trade names HOSTAPUR (Hoechst) and NANSA LS538/AS (Albright & Wilson).

While olefinic bonds generally are recognized to be difficult to polymerize, it was found unexpectedly that by including the AOS in the reactor charge prior to the polymerization of the hydrophilic and hydrophobic monomers (thereby giving it the maximum time for reaction with the monomers) one is able to incorporate the AOS into the polymer backbone. While not intending to be limited by the following, it is believed that the AOS may be grafted or otherwise anchored onto the polymer backbone upon polymerization of the hydrophilic and hydrophobic monomers.

Surprisingly, it was discovered that the AOS provided better performance with respect to milling efficiency and drying stability than did other sulfonated "monomers" which have been reported heretofore for use in the preparation of dispersants and dyes and which are designed to react with other monomers upon polymerization. Such sulfonated "monomers" include sodium vinyl sulfonate (SVS), sulfoethyl methacrylate (2-SEM), 2-acrylamido-2-propanesulfonic acid (AMPSA), sodium methallyl sulfonate (SMS) and sulfo phenyl methallyl ether (SPME). In fact, the sulfonated monomers have been shown not to be effective when used in place of the AOS according to the present invention.

It is critical that the AOS be added prior to polymerization of the hydrophobic and hydrophilic monomers in order to provide the maximum time for the AOS to be incorporated into the polymer during polymerization. It was discovered that if an equivalent amount of AOS is blended subsequent to the polymerization of the hydrophilic and hydrophobic monomers, the performance with respect to milling efficiency of those "blended systems" versus the inventive polymers is inferior (See Table A; comparison of the milling efficiency of a styrene/acrylic acid (1:1.5 molar ratio) copolymer comprising no AOS (Polymer 1), Polymer 1 blended with AOS (Polymer 1 + AOS) and a styrene/acrylic acid copolymer similar to Polymer 1 but for the fact that the monomers were polymerized in the presence of the AOS (Polymer 2). Polymers 1 and 2 were used at 10 percent by weight based on the total weight of the dye press-cake. AOS was used at 1 weight percent based on the weight of the dye press-cake. The dye slurries contained 26.7 weight percent of Disperse Blue 79 dye press-cake. Low % retention figures are desired.

**Table A**

| | **% retention after x minutes** | | | | |
|---|---|---|---|---|---|
| | 0 | 15 | 30 | 45 | 60 |
| Polymer 1 | 100 | 38 | 22 | 22 | 23 |
| Polymer 1 + AOS | 100 | 66 | 38 | 37 | 30 |
| Polymer 2⁽¹⁾ | 100 | 32 | 18 | 7 | 5 |

| | | | | | |
|---|---|---|---|---|---|
| (1) All polymers noted thusly herein are the same polymer. | | | | | |

As indicated by the data, polymerizing the styrene monomer and the acrylic acid monomer in the presence of the AOS results in significant improvement in milling efficiency when compared either to the polymer alone or the polymer blended with the AOS.

The weight average molecular weight (M_{w}) of the inventive polymers, as determined by gas permeation chromatography using polyacrylate standards, may range from 500 to 100,000. Preferably, the M_{w} of the polymers will range from 1,000 to 50,000, and more preferably from 4,000 to 30,000.

It was found that the AOS was a potent chain transfer agent, which potentially creates a problem in the production of higher molecular weight polymers, which are desired. It was found that by carefully controlling the amount of AOS used, or optionally using crosslinking monomers having more than one degree of unsaturation, in addition to the hydrophilic and hydrophobic monomers, molecular weight can be controlled (See Table B (1:1.5 molar ratio styrene/acrylic acid copolymer polymerized with AOS at indicated level) and Table C (1:1.5 molar ratio styrene/acrylic acid copolymers polymerized with AOS at 1.5 mole percent)).

**Table B**

| **Polymer** | **mole % AOS** | **Solids%** | **Mw** |
|---|---|---|---|
| 2A⁽¹⁾ | 2.9 | 31.2 | 7000 |
| 2B | 1.5 | 35.7 | 11900 |
| 2C | 0.73 | 36.3 | 12500 |
| 2D | 0.37 | 35.5 | 12000 |

**Table C**

| **Polymer** | **Cross- linking monomer** | **Solids%** | **Mw** |
|---|---|---|---|
| 3A⁽¹⁾ | none | 31.2 | 7000 |
| 3B | 1300 ppm* | 37.1 | 12500 |
| 3C | 530 ppm** | 34.6 | 14600 |
| ppm= parts per million based on total weight of monomer | | | |

| | | | |
|---|---|---|---|
| *polyethylene glycol diacrylate | | | |
| **divinyl benzene | | | |

The polymers according to the present invention surprisingly have been found to provide more efficient milling than do other dispersants known heretofore. For instance, preferred polymers are shown to provide more efficient milling than do commercial lignosulfonates used as dispersants in dye formulation (See Tables 6 and 6A). Milling efficiency as used herein is defined as the percent of oversize dye particles divided by the milling time. The percent oversize particles is defined as the weight of dye particles retained on a 1.6 micron glass microfiber GF/A filter divided by the weight of total dye filtered.

In preparing the dye compositions according to the present invention, the dye press-cake, water and the dispersant are mixed together under conditions effective to form a slurry thereof. While maximum dye solids in the slurry is prefered for economic reasons, the relative levels of dye press-cake and dispersant used must be effective to produce a stable slurry. Preferably, the slurry will contain from 25 to 55 weight percent of the dye press-cake and from 75 to 45 weight percent of water. Preferably, the slurry will contain from 35 to 45 weight percent of the dye press-cake and from 65 to 55 weight percent of water. The pH of the slurry is adjusted to from 6 to 9, preferably from 7 to 8.5.

The amount of dispersant used in preparing the slurry has been found to be critical in preparing the dye compositions. The actual weight percent of dispersant used based on the weight of the dye press-cake used is governed by the adsorption profile of the particular dispersant onto the particular dye. The more hydrophobic the dye, the easier it is for a dispersant molecule to attach to it in water. This is because the dispersant does not have to displace strongly adsorbed water from the dye surface, as the latter does not in fact wet out. Hydrophilic dyes are wetted out and therefore the dispersant molecule must adsorb more strongly than the water for displacement to occur. For soluble dyes or for dyes that are prone to change form during processing, a strongly anchoring dispersant is needed to block crystal sites where dissolution/recrystallization can occur. If too little of the dispersant is used relative to the level of dye press-cake, a stable dispersion of the dye particles will not be achieved. By stable dispersion, it is meant that the dye dispersion is stable from flocculation. If too much of the dispersant is used relative to the level of dye press-cake, the dye strength will be reduced due to a dilution affect. Therefore, the dispersant will be present in a minimum amount which is effective to provide a stable dispersion of the dye particles in water, up to a maximum amount which is effective to prevent significant reduction in the dye strength upon processing of the dye composition. Preferably, the level of dispersant used to prepare the slurry ranges from 30 to 50 weight percent based in the total weight of dye press-cake.

While the general ranges of dye press-cake and dispersant are set forth, one skilled in the art will realize, once having the benefit of this disclosure, that the levels of the dye press-cake and dispersant used are dependant one upon the other. The actual levels of dye press-cake and dispersant will be determined by factors such as those discussed above.

The slurry then is milled or otherwise treated under conditions which are effective to reduce the mean dye particle size to a predetermined value, thereby producing an aqueous dispersion of the dye. The time and milling speed used in preparing the dye dispersion are dependent one upon the other. For example, one may mill the slurry for longer times at slower speeds, or shorter times at greater speeds. The two conditions must be balanced such that the desired mean particle size is produced. Too little milling and the particle size will not be sufficiently small. Too much milling may result in agglomeration of particles, thereby resulting in excessive particle size. One skilled in the art will realize the importance of the diameter of the beads or balls to be used in the mill in optimizing milling conditions and would be able to make a suitable selection based on their knowledge and experience. One skilled in the art, once having the benefit of this disclosure, would be able to ascertain readily what conditions must be used to prepare aqueous dye dispersions having predetermined mean particle size.

The mean dye particle size of the aqueous dispersion will be less than 10 microns, preferably less than 5 microns. However, the actual predetermined mean dye particle size will be dependent upon the particular application in which the dye is used. For example, where the dye compositions are to used in the treatment of textiles, the mean particle size must be sufficiently small such that the dye particles can be incorporated into the textile. Accordingly, in this case the mean particle size will be below 2 microns.

The aqueous dye dispersion may be used directly in the treatment of substrates, such as textiles, or may be processed further by removing substantially all of the water from the aqueous dispersion, thereby forming a water-dispersible powder. The water-dispersible powder typically contains five percent water and 95 percent solids. The water-dispersible powder may be formulated into an aqueous dye dispersion by combining the dye powder with water and other components conventionally used in preparing such aqueous dye dispersions. Such components may comprise conventional dispersants and surfactants.

Preferably, the water-dispersible powders are prepared by spray drying the aqueous dispersion to form the water-dispersible powder. Spray drying places great stress on the aqueous dye dispersion in the form of heat and high shear forces at the point of atomization of the slurry in the drier, eg., at an atomizing nozzle or atomizing disc. Both of these factors can have a detrimental effect on spray drying stability when the dye dispersion is sprayed if the dye particles are not adequately stabilized in the dispersion by the dispersant. Spray drying stability is characterized by comparing the percent of dye particles retained on the 1.6 micron filter after milling but before spray drying, to the percent of dye particles retained on the 1.6 micron filter after spray drying. An increase in the percentage of retained particles after spray drying indicates less spray drying stability, while no change or a reduction in the percentage of retained particles after spray drying indicates a spray-dry-stable dye composition. When the dye particles are not spray-dry stable, the mean dye particle size of the resultant powders may be increased significantly, which in turn may lead to subsequent aqueous dye dispersions which are unstable to flocculation and/or exhibit reduced dye strength.

Another factor which effects spray-drying stability is the solids content of the dye dispersion. While a low solid content is more favorable in that there is a greater cooling effect of the additional water present in the system, it is desirable to have the solids content as high as possible in order to make the process economical. Therefore, one must balance the stresses associated with heat and shear forces with economics in determining how much dye solids one can put into the dye dispersion. A dispersant which would provide better milling efficiency and spray-drying stability would allow the use of higher dye solids, while minimizing the adverse affects of heat and shear forces associated with spray drying.

While spray drying is the preferred method of forming the water-dispersible powder, other means for removing water from the aqueous dye dispersion and which provide a powder having essentially the same characteristics of the spray-dried powder may be used. For example, a fluidized bed is another means for removing water from the aqueous dye dispersion. The powder so prepared is redispersible in water such that dispersions of the spray dried powder in water may be formed readily.

In certain embodiments, the dispersants of the present invention comprise a lignosulfonate in admixture with the polymers of the present invention. Applicants have discovered unexpectedly that the use of lignosulfonates in combination with the inventive polymers results in synergistic improvement of milling efficiency and spray dry stability when compared to the use of the lignosulfonate or polymer dispersants of the present invention alone. Kraft lignosulfonates used alone as dispersants are shown to provide better spray drying stability than do the inventive polymers used alone as dispersants; while the inventive polymers are shown to provide better milling efficiency when used alone than do the lignosulfonates when used alone. Based on the date presented herein, one would expect that the combination of the lignosulfonates and the inventive polymers would result in milling efficiency which is less than that of the inventive polymer when used alone and spray drying stability which is greater than the inventive polymers when used alone. In fact, it was discovered surprisingly that the milling efficiency is as good as or better than the inventive polymer when used alone, while a significant improvement in spray drying stability is realized. Blends of the inventive polymer with kraft lignosulfonates have allowed disperse dye formulation to a dye strength of 250 percent, at a high solid content, which remains stable during the spray dry process.

The following examples are presented to further describe the invention but are not to be construed as limiting the scope of the invention, the breadth of which is set forth in the appended claims.

### EXAMPLES

### Preparation of polymer:

The following is an example of a method for preparing a styrene acrylate polymer according to the present invention. Other embodiments, of course, may be utilized to prepare other polymers according to the present invention.

An initial charge of deionized water (168g), n-propanol (55g), AOS 40% aqueous solution (113g) and sodium persulfate (1g) was added to a 2 liter glass reactor fitted with a lid which had inlet ports for an agitator, water-cooled condenser, and for the addition of monomer and initiator solutions. The reactor contents were heated to reflux (approximately 86°C) and were held at this temperature for 1 hour.

At reflux and after the 1 hour hold, continuous additions of acrylic acid monomer (195g), styrene monomer (188g) and initiator solutions were added to the reactor concurrently with stirring over 2 hours and 2.25 hours, respectively.

The initiator solutions were as follows:

| | |
|---|---|
| t-butyl hydroperoxide | 10 |
| n-propanol | 5 |
| deionized water | 45 |
| sodium formaldehyde sulfoxylate | 4 |
| deionized water | 65 |

At the end of the initiator slow-additions, the batch was held for 1 hour to reduce residual monomers and then a solution of 47% aqueous sodium hydroxide solution (200g) was added to yield a polymer solution having a final pH of 7.5 to 8.5. After the addition of base, the alcohol co-solvent was removed from the polymer solution by azeotropic distillation under vacuum. During the distillation, deionized water was added to the polymer solution to maintain a processable polymer viscosity.

Once the distillation stage had been completed, the aqueous polymer solution was cooled to less than 30°C and transferred to storage. The resulting aqueous polymer solution had solids content of 31.2% and pH 7.9. The polymer M_{w} was about 7,000, as determined by GPC using sodium polyacrylate standards.

In preparing polymers according to the present invention, n-propanol is preferred over isopropanol, as it is a weaker chain transfer agent and therefore leads to higher molecular weight polymers, which are desired. The alcohol co-solvent is needed to provide the necessary solvency of the acrylic acid, styrene and AOS in the polymerization medium. It was found that as the level of n-propanol was decreased, the polymer molecular weight increased. Surprisingly, however, it was found that beyond a certain level of n-propanol, the polymer molecular weight decreased (See Table D). A further reduction in the level of n-propanol caused the polymer to precipitate out of solution due to insufficient solvent being present to solubilize all the reaction ingredients. Therefore, during polymerization, it is preferred that the n-propanol be used in amounts which are effective to maintain the solvency of the polymer in the polymerization medium and which are effective to prepare polymers of desired molecular weight.

**Table D**

| **Batch No.** | **% w/w alcohol on monomers** | **Solids%** | **pH** | **Mw** |
|---|---|---|---|---|
| 1 | 60% IPA | 39.8 | 7.7 | 1200 |
| 2 | 30% IPA | 32.3 | 7.2 | 6740 |
| 3 | 15% IPA | 28.4 | 7.9 | 4900 |
| 4⁽¹⁾ | 15% n-propanol | 31.2 | 7.5 | 7000 |
| 5 | 30% n-propanol | 30.2 | 7.3 | 7600 |

### Preparation of dye dispersions

Dye press-cake, polymer (and/or kraft lignosulfonate) and distilled water were mixed together to form a slurry. The pH was then adjusted to pH 8 using either 10% phosphoric acid or 10% sodium hydroxide solutions. The slurry was then milled.

### Milling of dye slurries

The purpose of the milling process is to reduce the particle size of the dye to achieve greater color strength and form a stable dispersion.

The dye slurries were milled in a 500 cm³ bead mill containing a 75% charge of 1 mm glass beads. The length of milling time and speed of the mill were varied depending on the experiment being conducted. For milling efficiency evaluation the bead mill was operated at 3500 rev min⁻¹ for 120 minutes. For preparation of dispersions for spray drying evaluation the bead mill was operated at 5000 rev min⁻¹ for 60 minutes. This speed was used to reduce the time required for sample preparation. Two cm³ samples of each dispersion were taken every 15 minutes for the first 60 minutes and then at 120 minutes (for milling efficiency evaluation).

### 1) Milling efficiency

The milling efficiency of each polymer was determined at 10% polymer solids based on the total weight of dye press-cake. The solids content of the slurry was adjusted 30 weight percent using deionized water. The slurry was adjusted to pH 8 before milling at 3500 rev min⁻¹ for 120 minutes. Two cm³ samples of each dispersion were taken every 15 minutes for the first 60 minutes and then at 120 minutes. Approximately 1 g of each sample was accurately weighed and diluted to 250 cm³ with distilled water. The diluted dispersion was then vacuum filtered through a pre-dried and pre-weighed 1.6 micron glass microfiber GF/A filter. The filter was then dried at 70°C for 3 hours before being reweighed. The retention of dye particles was then determined and expressed as a percentage of the solid dye originally filtered. Percent oversize particles (> 1.6 microns) against milling time were compared. A low percentage retention after a relatively short time indicating efficient milling.

### 2) Spray dry stability

A solid content of 33% was selected for general spray drying trials.

Typically 130°C inlet temperature and 80°C outlet temperature are used during the spray drying stages of dye manufacture.

After spray drying, 1 g of the spray dried powder obtained was redispersed in 200 cm³ of boiling water for 15 minutes and filtered as described above. Good spray drying stability was indicated by little or no difference between post spray drying and post milling results.

### EXAMPLE 1

### Effect of styrene monomer level on polymer performance

A series of polymers comprising 3 mole percent of AOS and increasing levels of styrene monomer was prepared. The polymers were evaluated for their effect on milling efficiency of Disperse Blue 79 and Disperse Red 60 dyes. These two dyes have different surface energies and require different dispersant properties in terms of anchoring characteristics. The surface of Disperse Red 60 requires polymers with a higher level of hydrophobic anchoring groups (in this case styrene) than Disperse Blue 79. This was clearly observed when milling efficiency was evaluated at polymer addition levels of 10 weight percent based on total weight of dye press-cake. This gave an overall solid content of the dispersion of 33%.

A plot of percent retention at 120 minutes vs. acrylic acid/styrene ratio showed that Disperse Blue 79 required an acrylic acid/styrene ratio AA:STY of 1.5:1, whereas Disperse Red 60 required a much higher styrene content at a acrylic acid/styrene ratio of 0.5:1. This work confirms that particular polymers will be necessary for particular dyes.

**TABLE 1**

| **Disperse Red 60** | | | | | |
|---|---|---|---|---|---|
| **AA:STY Molar Ratio** | **Milling Time (minutes)/Percent Retention** | | | | |
| | **15** | **30** | **45** | **60** | **120** |
| **1:1** | 83.4 | 78.8 | 72.5 | 71.1 | 38.3 |
| **0.6:1** | 76.2 | 73.6 | 75.6 | 51.3 | 28.2 |
| **0.2:1** | 77.8 | 67.9 | 63.7 | 60.3 | 52.8 |
| **1.5:1** | 83.8 | 78.4 | 81.5 | 68.7 | 62.0 |
| **0.4:1** | 72.8 | 76.0 | 57.2 | 49.6 | 25.0 |
| **0.5:1** | 75.0 | 69.2 | 57.3 | 53.3 | 23.8 |

**TABLE 1A**

| **Disperse Blue 79** | | | | | |
|---|---|---|---|---|---|
| **AA/STY molar ratio** | **Milling Time (minutes)/Percent Retention** | | | | |
| | **15** | **30** | **45** | **60** | **120** |
| **0.6:1** | 58.8 | 60.1 | 48.5 | 48.2 | 11.5 |
| **1:1** | 61.2 | 39.2 | 31.4 | 23.4 | 8.7 |
| **1.5:1** | 49.3 | 28.2 | 22.6 | 10.2 | 5.8 |
| **2.5:1** | 56.7 | 55.6 | 32.0 | 24.8 | 21.9 |

### EXAMPLE 2

### Effect of alpha olefin sulphonate level on polymer performance

A series of polymers (1.5:1 molar ratio AA/STY) with various levels of AOS was prepared. The polymers were evaluated for their effect on milling efficiency and spray drying stability. The addition level of the polymer was 100 weight percent based on the total weight of dye press-cake. This gave an overall solid content of 33%. Disperse Blue 79 was used.

There was no significant trend in milling efficiency performance observed when the AOS was added at levels between 0.5 and 10 mole percent (Table 2). Spray drying stability also did not show any significant trend within the same AOS levels at 100 weight percent addition of polymer based on total weight of dye press-cake (Table 2A).

**TABLE 2**

| **Results of percent retention after 2 hours for polymers with different levels of AOS** | | |
|---|---|---|
| **Sample No.** | **AOS Level (mole %)** | **Percent Retention** |
| 1 | 0.7 | 7.4 |
| 2⁽¹⁾ | 1.5 | 8.0 |
| 3 | 2.9 | 5.8 |
| 4 | 6.4 | 8.3 |

**TABLE 2A**

| **Spray drying stability at 200% dye strength using polymers with various AOS levels** | | | |
|---|---|---|---|
| **Sample No.** | **AOS Level (mole %)** | **Percent Retention After Milling** | **Percent Retention After Spray Drying** |
| 1 | 1.0 | 2.9 | 5.2 |
| 2 | 2.0 | 1.1 | 4.9 |
| 3 | 4.0 | 2.1 | 2.2 |

### EXAMPLE 3

### Effect of polymer molecular weight

A series of polymers (1.5:1 molar ratio AA/STY:3 mole percent AOS) of various molecular weight were evaluated for their effect on milling efficiency and spray drying stability at a dye strength of 200%. Disperse Blue 79 was used.

The performance of the polymers improved with an increase in molecular weight. This was demonstrated by increased milling efficiency and spray dry stability.

**TABLE 3**

| **Effect of molecular weight on spray drying stability** | | | |
|---|---|---|---|
| **Sample No.** | **Molecular Weight** | **Percent Retention After Milling** | **Percent Retention After Spray Drying** |
| 1 | 1200 | 4.6 | 23.6 |
| 2 | 4150 | 4.8 | 9.6 |
| 3 | 4900 | 2.1 | 7.0 |
| 4 | 6750 | 2.4 | 4.7 |
| 5⁽¹⁾ | 7000 | 2.8 | 6.5 |

### EXAMPLE 4

### Effect of replacing AOS with alternative sulphonate monomers

A series of polymers comprising 3 mole percent of SMS, AMPS, SPME and 2-SEM, respectively, in place of 3 mole percent of AOS was prepared. The polymers were evaluated for their effect on milling efficiency and spray drying stability. SMS was the most effective of these monomers and was tested at various levels in high molecular weight polymers at dye strengths of 200% for spray drying stability in comparison with AOS. However, as the results show, was significantly less effective than AOS.

**TABLE 4**

| **Spray dry stability results at 200% dye strength of sulphonate monomers** | | | |
|---|---|---|---|
| **Sample No.** | **Sulphonate Monomer** | **Percent Retention After Milling** | **Percent Retention After Spray Drying** |
| 1 | SSS | 5.2 | 21.5 |
| 2 | AMPSA | 7.6 | 29.5 |
| 3 | SPME | 4.8 | 23.9 |
| 4 | SMS | 7.5 | 13.0 |
| 5 | 2-SEM | 5.8 | 23.3 |
| 6 | AOS | 4.6 | 7.0 |

**TABLE 4A**

| **SMS level in high molecular weight polymer spray dry stability** | | | |
|---|---|---|---|
| **Sample No.** | **SMS Level (mole %)** | **Percent Retention After Milling** | **Percent Retention After Spray Drying** |
| 1 | 5.4 | 3.5 | 11.9 |
| 2 | 7.4 | 3.8 | 11.1 |
| 3 | 13.8 | 5.1 | 23.7 |

### EXAMPLE 5

### Effect of dye strength on performance

Formulated dye products are supplied at specific dye strengths. The dye strength depends on the ratio of active dye to additives present. The main component of the additives is dispersant. The usual dye strength at which Disperse Blue 79 is supplied by the industry is 200%. Higher dye strengths are desirable but place greater demands on dispersant performance.

Milling efficiency and spray drying stability at dye strengths of 200% and 275% were evaluated for Polymer 5, (1.5:1 acrylic acid/styrene;1.5 mole% AOS: M_{w} 7.000) and the kraft lignosulfonates.

The kraft lignosulfonates and polymers performed well at 200% dye strengths. At the higher dye strength of 275% all of the dispersants tested failed to perform adequately.

**TABLE 5**

| **Spray dry stability at 200%** | | |
|---|---|---|
| **Dispersant** | **Percent Retention After Milling** | **Percent Retention After Spray Drying** |
| Reax 85A⁽²⁾ | 8.7 | 10.0 |
| Reax 910⁽³⁾ | 7.7 | 11.3 |
| Polymer 5⁽¹⁾ | 2.8 | 6.5 |

**TABLE 5A**

| **Spray dry Stability at 275%** | | |
|---|---|---|
| **Lignosulfonate/Polymer** | **Percent Retention After Milling** | **Percent Retention After Spray Drying** |
| Reax 85A | 10.2 | 31.8 |
| Reax 910 | 7.9 | 41.8 |
| Polymer 5⁽¹⁾ | 2.3 | 38.7 |

### EXAMPLE 6

### The effect of blending polymer with kraft lignosulfonates in a high solid content/high dye strength formulation

Blending of polymer with kraft lignosulfonates was conducted to investigate the possibility of synergistic effects improving dispersant performance to allow high solid content/high dye strength formulations to be used. A solid content of 45% and a dye strength of 250% (industry standard = 200%) were used.

Lignosulfonate was blended at different ratios with Polymer 6 (1.5:1 acrylic acid/styrene + 3 mole % AOS: M_{w} 5,000) at a high solid content of 45% and a dye strength of 250%. The formulation was evaluated for milling efficiency and spray dry stability.

Performance of the dispersant blend was good. Significantly higher performance was achieved in comparison with that achieved for the dispersants used separately. A dye strength of 250% that was table to spray drying was easily reached. Performance varied with the level of lignosulfonate and polymer used; higher performance was achieved with a higher level of lignosulfonate than polymer.

**TABLE 6**

| **Blending of lignosulfonate (Reax 85A) with polymer 503/78** | | |
|---|---|---|
| **Reax 85/A:Polymer Ratio** | **Percent Retention After Milling** | **Percent Retention After Spray Drying** |
| Reax 85A | --- | --- |
| Polymer 6 | 1.5 | 17.7 |
| 1 : 1 | 1.4 | 1.6 |
| 1 : 2 | 1.4 | 5.7 |
| 2 : 1 | 2.1 | 1.9 |

**TABLE 6A**

| **Blending of lignosulfonate (Reax 910) with polymer 503/78** | | |
|---|---|---|
| **Reax 910:Polymer Ratio** | **Percent Retention After Milling** | **Percent Retention After Spray Drying** |
| Reax 910 | 3.1 | 3.7 |
| Polymer 6 | 1.5 | 17.7 |
| 1 : 1 | 1.1 | 6.2 |
| 1 : 2 | 1.6 | 4.5 |
| 2 : 1 | 1.4 | 2.6 |

## Claims

1. A method for preparing a polymer, the method comprising:
combining a hydrophilic monomer, a hydrophobic monomer selected from the group consisting of monomers which contain one or more aromatic rings and a polymerizable vinyl group, and from 0.5 to 10 mole percent of an alpha-olefin sulfonate, wherein the alpha-olefin sulfonate is refluxed with a water-soluble persulfate prior to combining the hydrophilic monomer, the hydrophobic monomer and the alpha-olefin sulfonate, and wherein the molar ratio of the hydrophilic monomer to the hydrophobic monomer ranges from 5:1 to 0.2:1; and
polymerizing the hydrophilic monomer and the hydrophobic monomer in the presence of the alpha-olefin sulfonate.

2. The method of claim 1 wherein the hydrophilic monomer comprises at least one activated carbon-carbon double bond and at least one carboxyl group.

3. The method of claim 1 wherein the hydrophilic monomer comprises an unsaturated carboxylic acid having the general structure 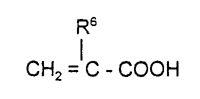 wherein R⁶ is a substituent selected from the group consisting of hydrogen, halogen, cyano, alkyl, aryl, aralkyl, alkaryl or cycloaliphatic groups.

4. A polymer prepared from
a hydrophilic monomer,
a hydrophobic monomer selected from the group consisting of monomers which contain one or more aromatic rings and a polymerizable vinyl group; and
from 0.5 to 10 mole percent of an alpha-olefin sulfonate, wherein the alpha-olefin sulfonate is refluxed with a water-soluble persulfate prior to combining the hydrophilic monomer, the hydrophobic monomer and the alpha-olefin sulfonate, and wherein the molar ratio of the hydrophilic monomer to the hydrophobic monomer ranges from 5:1 to 0.2:1.

5. The polymer of claim 4 wherein the hydrophilic monomer comprises at least one activated carbon-carbon double bond and at least one carboxyl group.

6. The polymer of claim 4 wherein the hydrophilic monomer comprises an unsaturated carboxylic acid having the general structure 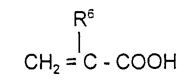 wherein R⁶ is a substituent selected from the group consisting of hydrogen, halogen, cyano, alkyl, aryl, aralkyl, alkaryl or cycloaliphatic groups.

7. A dye dispersant, comprising:
a polymer prepared from
a hydrophilic monomer,
a hydrophobic monomer selected from the group consisting of monomers which contain one or more aromatic rings and a polymerizable vinyl group; and
from 0.5 to 10 mole percent of an alpha-olefin sulfonate, and
a lignosulfonate in admixture with the polymer,
wherein the molar ratio of the hydrophilic monomer to the hydrophobic monomer ranges from 5:1 to 0.2:1.

8. The dispersant of claim 7 wherein the hydrophilic monomer comprises at least one activated carbon-carbon double bond and at least one carboxyl group.

9. The dispersant of claim 7 wherein the hydrophilic monomer comprises an unsaturated carboxylic acid having the general structure 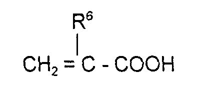 wherein R⁶ is a substituent selected from the group consisting of hydrogen, halogen, cyano, alkyl, aryl, aralkyl, alkaryl or cycloaliphatic groups.

10. A water-dispersible dye composition, comprising:
a dye; and
a dispersant comprising a polymer prepared from a hydrophilic monomer, a hydrophobic monomer selected from the group consisting of monomers which contain one or more aromatic rings and a polymerizable vinyl group; and from 0.5 to 10 mole percent of an alpha-olefin sulfonate, wherein the molar ratio of the hydrophilic monomer to the hydrophobic monomer ranges from 5:1 to 0.2:1.

11. The dye composition of claim 10 wherein the hydrophilic monomer comprises at least one activated carbon-carbon double bond and at least one carboxyl group.

12. The dye composition of claim 10 wherein the hydrophilic monomer comprises an unsaturated carboxylic acid having the general structure 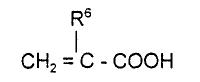 wherein R⁶ is a substituent selected from the group consisting of hydrogen, halogen, cyano, alkyl, aryl, aralkyl, alkaryl or cycloaliphatic groups.

13. The dye composition of claim 10 wherein the dispersant further comprises a lignosulfonate in admixture with the polymer.

## Patentansprüche

1. Verfahren zur Herstellung eines Polymers, wobei das Verfahren umfaßt:
Kombinieren eines hydrophilen Monomers, eines hydrophoben Monomers, das aus der Gruppe ausgewählt ist, die aus ein oder mehrere aromatische Ringe und eine polymerisierbare Vinylgruppe enthaltenden Monomeren besteht, und 0,5 bis 10 Mol% eines α-Olefinsulfonats, wobei das α-Olefinsulfonat vor der Kombination des hydrophilen Monomers, des hydrophoben Monomers und des α-Olefinsulfonats mit einem wasserlöslichen Persulfat unter Rückfluß gekocht wird, und wobei das molare Verhältnis des hydrophilen Monomers zu dem hydrophoben Monomer im Bereich von 5:1 bis 0,2:1 liegt; und
Polymerisieren des hydrophilen Monomers und des hydrophoben Monomers in Gegenwart des α-Olefinsulfonats.

2. Verfahren nach Anspruch 1, wobei das hydrophile Monomer mindestens eine aktivierte Kohlenstoff-Kohlenstoff-Doppelbindung und mindestens eine Carboxylgruppe umfaßt.

3. Verfahren nach Anspruch 1, wobei das hydrophile Monomer eine ungesättigte Carbonsäure mit der allgemeinen Struktur 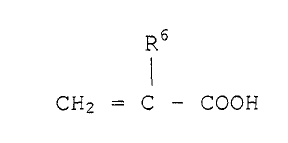 umfaßt, wobei R⁶ ein Substituent ist, der aus der aus Wasserstoff, Halogen, Cyano, Alkyl, Aryl, Aralkyl, Alkaryl oder cycloaliphatischen Gruppen bestehenden Gruppe ausgewählt ist.

4. Polymer, hergestellt aus
einem hydrophilen Monomer,
einem hydrophoben Monomer, ausgewählt aus der Gruppe, die aus ein oder mehrere aromatische Ringe und eine polymerisierbare Vinylgruppe enthaltenden Monomeren besteht; und
etwa 0,5 bis 10 Mol% eines α-Olefinsulfonats, wobei das α-Olefinsulfonat vor dem Kombinieren des hydrophilen Monomers, des hydrophoben Monomers und des α-Olefinsulfonats mit einem wasserlöslichen Persulfat unter Rückfluß gekocht wird, und das molare Verhältnis des hydrophilen Monomers zum hydrophoben Monomer im Bereich von 5:1 bis 0,2:1 liegt.

5. Polymer nach Anspruch 4, wobei das hydrophile Monomer mindestens eine aktivierte Kohlenstoff-Kohlenstoff-Doppelbindung und mindestens eine Carboxylgruppe umfaßt.

6. Polymer nach Anspruch 4, wobei das hydrophile Monomer eine ungesättigte Carbonsäure mit der allgemeinen Struktur 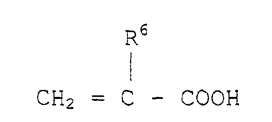 umfaßt, wobei R⁶ ein Substituent ist, der aus der aus Wasserstoff, Halogen, Cyano, Alkyl, Aryl, Aralkyl, Alkaryl oder cycloaliphatischen Gruppen bestehenden Gruppe ausgewählt ist.

7. Dispergiermittel für Farbstoff, umfassend:
ein Polymer, hergestellt aus
einem hydrophilen Monomer,
einem hydrophoben Monomer,
ausgewählt aus der Gruppe, die aus ein oder mehrere aromatische Ringe und eine polymerisierbare Vinylgruppe enthaltenden Monomeren besteht; und
0,5 bis 10 Mol% eines α-Olefinsulfonats und
ein Lignosulfonat in Mischung mit dem Polymer,
wobei das molare Verhältnis des hydrophilen Monomers zu dem hydrophoben Monomer im Bereich von 5:1 bis 0,2:1 liegt.

8. Dispergiermittel nach Anspruch 7, wobei das hydrophile Monomer mindestens eine aktivierte Kohlenstoff-Kohlenstoff-Doppelbindung und mindestens eine Carboxylgruppe umfaßt.

9. Dispergiermittel nach Anspruch 7, wobei das hydrophile Monomer eine ungesättigte Carbonsäure mit der allgemeinen Struktur 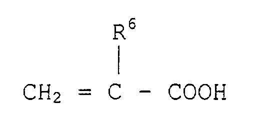 umfaßt, wobei R⁶ ein Substituent ist, der aus der aus Wasserstoff, Halogen, Cyano, Alkyl, Aryl, Aralkyl, Alkaryl oder cycloaliphatischen Gruppen bestehenden Gruppe ausgewählt ist.

10. Wasserdispergierbare Farbstoffzusammensetzung, umfassend:
einen Farbstoff und
ein Dispergiermittel, umfassend ein Polymer, hergestellt aus einem hydrophilen Monomer, einem hydrophoben Monomer, das aus der Gruppe ausgewählt ist, die aus ein oder mehrere aromatische Ringe und eine polymerisierbare Vinylgruppe enthaltenden Monomeren besteht; und 0,5 bis 10 Mol% eines α-Olefinsulfonats, wobei das molare Verhältnis des hydrophilen Monomers zu dem hydrophoben Monomer im Bereich 5:1 zu 0,2:1 liegt.

11. Farbstoffzusammensetzung nach Anspruch 10, wobei das hydrophile Monomer mindestens eine aktivierte Kohlenstoff-Kohlenstoff-Doppelbindung und mindestens eine Carboxylgruppe umfaßt.

12. Farbstoffzusammensetzung nach Anspruch 10, wobei das hydrophile Monomer eine ungesättigte Carbonsäure mit der allgemeinen Struktur 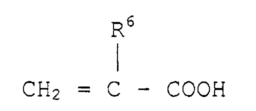 umfaßt, wobei R⁶ ein Substituent ist, der aus der aus Wasserstoff, Halogen, Cyano, Alkyl, Aryl, Aralkyl, Alkaryl oder cycloaliphatischen Gruppen bestehenden Gruppe ausgewählt ist.

13. Farbstoffzusammensetzung nach Anspruch 10, wobei das Dispergiermittel darüber hinaus ein Lignosulfonat in Mischung mit dem Polymer umfaßt.

## Revendications

1. Procédé pour la préparation d'un polymère, procédé comprenant les étapes consistant :
à associer un monomère hydrophile, un monomère hydrophobe choisi dans le groupe consistant en des monomères qui contiennent un ou plusieurs noyaux aromatiques et un groupe vinyle polymérisable, et 0,5 à 10 % en moles d'un sulfonate d'alpha-oléfine, le sulfonate d'alpha-oléfine étant chauffé au reflux avec un persulfate hydrosoluble avant d'associer le monomère hydrophile, le monomère hydrophobe et le sulfonate d'alpha-oléfine, et le rapport molaire du monomère hydrophile au monomère hydrophobe étant compris dans l'intervalle de 5:1 à 0,2:1 ; et
à polymériser le monomère hydrophile et le monomère hydrophobe en présence du sulfonate d'alpha-oléfine.

2. Procédé suivant la revendication 1, dans lequel le monomère hydrophile comprend au moins une double liaison carbone-carbone activée et au moins un groupe carboxyle.

3. Procédé suivant la revendication 1, dans lequel le monomère hydrophile comprend un acide carboxylique insaturé de structure générale 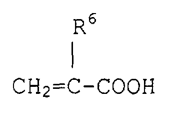 dans laquelle R⁶ représente un substituant choisi dans le groupe consistant en l'hydrogène, des groupes halogéno, cyano, alkyle, aryle, aralkyle, alkaryle et cycloaliphatiques.

4. Polymère préparé à partir
d'un monomère hydrophile ;
d'un monomère hydrophobe choisi dans le groupe consistant en des monomères qui contiennent un ou plusieurs noyaux aromatiques et un groupe vinyle polymérisable ; et
de 0,5 à 10 % en moles d'un sulfonate d'alpha-oléfine, le sulfonate d'alpha-oléfine étant chauffé au reflux avec un persulfate hydrosoluble avant d'associer le monomère hydrophile, le monomère hydrophobe et le sulfonate d'alpha-oléfine, et le rapport molaire du monomère hydrophile au monomère hydrophobe étant compris dans l'intervalle de 5:1 à 0,2:1.

5. Polymère suivant la revendication 4, dans lequel le monomère hydrophile comprend au moins une double liaison carbone-carbone activée et au moins un groupe carboxyle.

6. Polymère suivant la revendication 4, dans lequel le monomère hydrophile comprend un acide carboxylique insaturé de structure générale 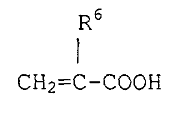 dans laquelle R⁶ représente un substituant choisi dans le groupe consistant en l'hydrogène et des groupes halogéno, cyano, alkyle, aryle, aralkyle, alkaryle et cycloaliphatiques.

7. Dispersant de colorant, comprenant :
un polymère préparé à partir
d'un monomère hydrophile,
d'un monomère hydrophobe choisi dans le groupe consistant en des monomères qui contiennent un ou plusieurs noyaux aromatiques et un groupe vinyle polymérisable ; et
de 0,5 à 10 % en moles d'un sulfonate d'alpha-oléfine, et
un lignosulfonate en mélange avec le polymère,
dans lequel le rapport molaire du monomère hydrophile au monomère hydrophobe est compris dans l'intervalle de 5:1 à 0,2:1.

8. Dispersant suivant la revendication 7, dans lequel le monomère hydrophile comprend au moins une double liaison carbone-carbone activée et au moins un groupe carboxyle.

9. Dispersant suivant la revendication 7, dans lequel le monomère hydrophile comprend un acide carboxylique insaturé de structure générale 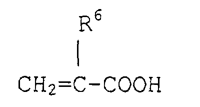 dans laquelle R⁶ représente un substituant choisi dans le groupe consistant en l'hydrogène et des groupes halogéno, cyano, alkyle, aryle, aralkyle, alkaryle et cycloaliphatiques.

10. Composition de colorant dispersable dans l'eau, comprenant :
un colorant ; et
un dispersant comprenant un polymère préparé à partir d'un monomère hydrophile ; d'un monomère hydrophobe choisi dans le groupe consistant en des monomères qui contiennent un ou plusieurs noyaux aromatiques et un groupe vinyle polymérisable ; et de 0,5 à 10 % en moles d'un sulfonate d'alpha-oléfine, le rapport molaire du monomère hydrophile au monomère hydrophobe étant compris dans l'intervalle de 5:1 à 0,2:1.

11. Composition de colorant suivant la revendication 10, dans laquelle le monomère hydrophile comprend au moins une double liaison carbone-carbone activée et au moins un groupe carboxyle.

12. Composition de colorant suivant la revendication 10, dans laquelle le monomère hydrophile comprend un acide carboxylique insaturé de structure générale 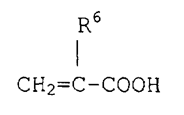 dans laquelle R⁶ représente un substituant choisi dans le groupe consistant en l'hydrogène et des groupes halogéno, cyano, alkyle, aryle, aralkyle, alkaryle et cycloaliphatiques.

13. Composition de colorant suivant la revendication 10, dans laquelle le dispersant comprend en outre un lignosulfonate en mélange avec le polymère.
